# EUROPÄISCHE PATENTSCHRIFT

(11) **EP 3 918 299 B1**
(45) Veröffentlichungstag und Bekanntmachung des Hinweises auf die Patenterteilung: **12.02.2025**
(21) Anmeldenummer: 19832924.5
(22) Anmeldetag: 19.12.2019
(51) Int. Cl.: G01M 13/04, G01M 17/007

(54) **VERFAHREN ZUM ÜBERWACHEN WENIGSTENS EINES LAGERS EINES KRAFTFAHRZEUGS, INSBESONDERE EINES KRAFTWAGENS, SOWIE KRAFTFAHRZEUG**
METHOD FOR MONITORING AT LEAST ONE BEARING OF A MOTOR VEHICLE, IN PARTICULAR OF A MOTORIZED VEHICLE, AND MOTOR VEHICLE
PROCÉDÉ POUR SURVEILLER AU MOINS UN PALIER D'UN VÉHICULE À MOTEUR, EN PARTICULIER D'UN VÉHICULE AUTOMOBILE, AINSI QUE VÉHICULE À MOTEUR

(30) Priorität: 31.01.2019 DE 102019201216
(43) Veröffentlichungstag der Anmeldung: 08.12.2021
(73) Patentinhaber: Audi AG, 85045 Ingolstadt (DE)
(72) Erfinder: KARL, Bernhard, 85080 Gaimersheim (DE); WINKELMEYR, Felix, 85057 Ingolstadt (DE)
(86) Internationale Anmeldenummer: PCT/EP2019/086388
(87) Internationale Veröffentlichungsnummer: WO 2020/156745

(56) Entgegenhaltungen:
- GB-A- 2 532 760
- CAVAR NIKSA ET AL: "OVERALL EFFICIENCY IN ELECTRIC ROAD VEHICLES", vol. 8, no. 1, 30 June 2018 (2018-06-30), XP093122809, Retrieved from the Internet <URL:https://www.znrfak.ni.ac.rs/SE-Journal/Archive/SE-WEB%20Journal%20-%20Vol8-1/radovi/09%20Mario%20Vrazic_EN.pdf> DOI: 10.7562/SE2018.8.01.09
- MEHMET SIMSIR ET AL: "Real-Time Monitoring and Fault Diagnosis of a Low Power Hub Motor Using Feedforward Neural Network", COMPUTATIONAL INTELLIGENCE AND NEUROSCIENCE, vol. 2016, 27 December 2015 (2015-12-27), US, pages 1 - 13, XP055680130, ISSN: 1687-5265, DOI: 10.1155/2016/7129376

## Beschreibung

Die Erfindung betrifft ein Verfahren zum Überwachen wenigstens eines Lagers eines Kraftfahrzeugs, insbesondere eines Kraftwagens. Außerdem betrifft die Erfindung ein Kraftfahrzeug, insbesondere einen Kraftwagen.

Die EP 2 989 436 B1 offenbart ein Verfahren zur Überwachung des Gesundheitszustands eines Fahrzeugsystems. Bei dem Verfahren wird eine Vielzahl von Parameterwerten für das Fahrzeug unter verschiedenen Betriebsbedingungen als ein End-off-Line-Test gemessen. Die Parameterwerte werden in einer Fingerabdruckdatei gespeichert. Außerdem wird die gleiche Vielzahl von Parameterwerten, die in der Fingerabdruckdatei enthalten sind, bei ähnlichen Belastungsbedingungen nach einem vorbestimmten Zeitintervall gemessen.

Der DE 10 2015 213 084 A1 ist ein Verfahren zur Überwachung eines Lagersystems als bekannt zu entnehmen. Außerdem ist aus der EP 1 902 293 B1 eine Schnittstellenmodulvorrichtung zum Anschluss an eine elektrische Maschine bekannt.

Der Veröffentlichung "Real-Time Monitoring and Fault Diagnosis of a Low Power Hub Motor Using Feedforward Neural Network", Simsir et al, Computational Intelligence and Neuroscience, Bd. 2016, 27.12.2015, Seiten 1-13, offenbart eine Echtzeit-Überwachung und Fehlerdiagnose eines Nabenmotors mit geringer Leistung unter Verwendung eines neuronalen Feedforward-Netzwerks.

Die GB 2 532 760 A offenbart ein Zustandsüberwachungssystem, das in einem Fahrzeug zur Überwachung von Achsen oder Lagereinheiten verwendet wird.

Aufgabe der vorliegenden Erfindung ist es, ein Verfahren und ein Kraftfahrzeug zu schaffen, sodass wenigstens ein Lager des Kraftfahrzeugs besonders präzise überwacht werden kann.

Diese Aufgabe wird erfindungsgemäß durch ein Verfahren mit den Merkmalen des Patentanspruchs 1 sowie durch ein Kraftfahrzeug mit den Merkmalen des Patentanspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Überwachen wenigstens eines Lagers vorzugsweise als Kraftwagen, insbesondere als Personenkraftwagen, ausgebildeten Kraftfahrzeugs. Das Kraftfahrzeug umfasst dabei das wenigstens eine Lager und wenigstens eine elektrische Maschine, mittels welcher das Kraftfahrzeug, insbesondere elektrisch, angetrieben werden kann. Das Kraftfahrzeug ist somit vorzugsweise als Hybrid- oder Elektrofahrzeug, insbesondere als batterieelektrisches Fahrzeug, ausgebildet, sodass das Kraftfahrzeug mittels der elektrischen Maschine angetrieben werden kann. Bei dem Verfahren wird die elektrische Maschine mit elektrischem Wechselstrom versorgt, welcher von einer der elektrischen Maschine zugeordneten Leistungselektronik des Kraftfahrzeugs bereitgestellt wird. Durch das Versorgen der elektrischen Maschine mit dem genannten Wechselstrom wird die elektrische Maschine in einem Motorbetrieb und somit als ein Elektromotor betrieben, mittels welchem das Kraftfahrzeug angetrieben wird.

Des Weiteren wird der von der Leistungselektronik bereitgestellte Wechselstrom mittels wenigstens eines Wechselstromsensors des Kraftfahrzeugs, insbesondere der Leistungselektronik, erfasst. Außerdem wird in Abhängigkeit von dem erfassten Wechselstrom beziehungsweise aus dem erfassten Wechselstrom wenigstens ein Drehmoment ermittelt, insbesondere berechnet, welches zum Antreiben des Kraftfahrzeugs von dem Elektromotor bereitgestellt wird. Des Weiteren wird das Lager in Abhängigkeit von dem ermittelten, insbesondere berechneten, Drehmoment überwacht beziehungsweise überprüft. Das Verfahren wird vorzugsweise mittels einer elektronischen Recheneinrichtung des Kraftfahrzeugs durchgeführt, sodass beispielsweise das genannte Drehmoment mittels der elektronischen Recheneinrichtung ermittelt, insbesondere berechnet, wird.

Durch das erfindungsgemäße Verfahren ist es einerseits möglich, das vorzugsweise als Wälzlager, insbesondere als Kugellager oder aber als anderes Wälzlager, ausgebildete Lager zeitlich besonders umfangreich, insbesondere zumindest im Wesentlichen kontinuierlich oder permanent, zu überwachen. Insbesondere kann das Lager besonders umfangreich während eines Betriebs, insbesondere während eines Normalbetriebs, des Kraftfahrzeugs und wird dabei immer dann überwacht und somit überprüft werden, wenn das Kraftfahrzeug von der elektrischen Maschine beziehungsweise von dem Elektromotor angetrieben wird. In der Folge können etwaige Veränderungen, insbesondere Zunahmen beziehungsweise Erhöhungen, des Drehmoments besonders frühzeitig ermittelt beziehungsweise erkannt werden. Aus einer solchen Veränderung, insbesondere aus einer Zunahme beziehungsweise Erhöhung, des Drehmoments kann auf einen zunehmenden Verschleiß des Lagers beziehungsweise auf einen drohenden Schaden des Lagers rückgeschlossen werden. In der Folge ist es beispielsweise möglich, wenigstens eine Maßnahme zu ergreifen, bevor es tatsächlich zu einem übermäßigen Schaden oder einem Ausfall des Lagers kommt. Die genannte Maßnahme kann umfassen oder dazu führen, dass das Lager repariert oder ausgetauscht beziehungsweise gewartet wird, bevor es zu einem übermäßigen Verschleiß, insbesondere bevor es zu einer Beschädigung oder einem Ausfall, des Lagers kommt.

Andererseits ermöglicht es das erfindungsgemäße Verfahren, das Drehmoment äußerst präzise zu ermitteln, da bei dem erfindungsgemäßen Verfahren der Wechselstrom mittels des Wechselstromsensors erfasst wird. Somit wird bei dem erfindungsgemäßen Verfahren nicht oder nicht nur ein elektrischer Gleichstrom erfasst, welcher beispielsweise in elektrischen Strom umgewandelt wird, sondern die Erfassung des Wechselstroms ermöglicht es, das Drehmoment besonders präzise zu ermitteln. Mit anderen Worten ist es bei dem erfindungsgemäßen Verfahren vorgesehen, dass das Drehmoment nicht oder nicht nur auf Basis des Gleichstroms ermittelt wird, sondern das Drehmoment wird unter Berücksichtigung des erfassten Wechselstroms ermittelt. Dabei kann der Wechselstrom besonders präzise erfasst werden, sodass das Drehmoment besonders präzise ermittelt werden kann. Auf diese Weise kann das Lager insbesondere dann besonders präzise und vorteilhaft überwacht und überprüft werden, wenn das Lager Bestandteil der elektrischen Maschine und dabei beispielsweise in der elektrischen Maschine, insbesondere in einem Gehäuse der elektrischen Maschine, angeordnet ist. Der Erfindung liegen dabei insbesondere die folgenden Erkenntnisse zugrunde: Bei beispielsweise als Elektro- oder Hybridfahrzeugen ausgebildeten Kraftfahrzeugen, kommen üblicherweise mehrere, insbesondere als Wälzlager und dabei beispielsweise als Kugellager ausgebildete Lager zum Einsatz. Derartige Lager kommen insbesondere in jeweiligen elektrischen Maschinen der jeweiligen Kraftfahrzeuge zum Einsatz. Es wurde durch Versuche gefunden, dass ein Großteil von etwaig auftretenden Schäden von elektrischen Maschinen von Kraftfahrzeugen auf Lagerschäden zurückzuführen ist. Dabei werden die Lager üblicherweise im sogenannten Feldeinsatz nicht überwacht, wobei ein Schaden beziehungsweise ein Ausfall eines solchen Lagers üblicherweise zum kompletten Ausfall des Kraftfahrzeugs beziehungsweise dessen Antriebsstrangs führen kann. Diagnoseverfahren, welche eine frühzeitige Erkennung eines insbesondere übermäßigen Verschleißes eines Lagers ermöglichen, existieren in der Regel nicht. Die zuvor genannten Probleme und Nachteile können nun durch das erfindungsgemäße Verfahren vermieden werden, sodass beispielsweise das Lager gewartet oder repariert oder ausgetauscht werden kann, bevor es zu einem vollständigen Ausfall beziehungsweise Versagen des Lagers kommt. Somit kann das Kraftfahrzeug mit noch funktionstüchtigem Lager beispielsweise zu einer Werkstatt gefahren werden, um in der Werkstatt das Lager zu reparieren, auszutauschen oder zu warten, Dadurch können aufwändige Abschlepp- und Transportvorgänge des Kraftfahrzeugs nach einem Lagerschaden vermieden werden.

Eine weitere, der Erfindung zugrundeliegende Erkenntnis ist, dass mit zunehmendem Verschleiß beziehungsweise mit zunehmender Verschlechterung eines Zustands des Lagers dessen Reibwiderstand zunimmt. Dies führt zu einer Zunahme des Drehmoments. Das Drehmoment umfasst somit beispielsweise den Reibwiderstand des Lagers beziehungsweise ein aus dem Reibwiderstand resultierendes und auch einfach als Lagermoment bezeichnetes Lagereibmoment. Wird nun beispielsweise dadurch, dass das Lager mittels des Verfahrens über eine vorgebbare oder vorgegebene Zeitspanne und dabei beispielsweise zumindest im Wesentlichen kontinuierlich überwacht wird, ein solcher Trend erkannt, dass das Drehmoment, insbesondere bei vergleichbaren oder gleichen Bedingungen, bei denen das Kraftfahrzeug auf die beschriebene Weise angetrieben wird, zunimmt, so kann infolgedessen darauf rückgeschlossen werden, dass das Lagerreibmoment und somit dessen Verschleiß zunimmt. Da nun der Wechselstrom erfasst wird und der Wechselstrom besonders präzise erfasst werden kann, können das Drehmoment und somit beispielsweise der Verschleiß des Lagers beziehungsweise das Lagerreibmoment besonders präzise ermittelt werden. Insbesondere kann frühzeitig erkannt werden, dass ein übermäßiger Verschleiß des Lagers vorliegt. Mit anderen Worten, überschreitet beispielsweise das ermittelte Drehmoment einen, insbesondere vorgebbaren oder vorgegebenen, Grenzwert, so kann darauf rückgeschlossen werden, dass das Lager zwar noch funktionstüchtig ist, jedoch dass der Verschleiß des Lagers eine gewünschte Grenze überschreitet. In der Folge kann beispielsweise die zuvor genannte Maßnahme ergriffen oder durchgeführt werden, um das Lager auszutauschen und zu warten beziehungsweise um einen Austausch oder eine Wartung des Lagers zu bewirken. Insgesamt ist erkennbar, dass das erfindungsgemäße Verfahren ein Diagnoseverfahren ist, mittels welchem ein übermäßiger Verschleiß des Lagers besonders frühzeitig erkannt werden kann. Dadurch kann die Gefahr, dass es - während das Lager im Kraftfahrzeug verbaut ist - zu einem Schaden des Lagers und in der Folge zu einem Schaden der elektrischen Maschine kommt, besonders gering gehalten werden.

Des Weiteren ist es vorgesehen, dass wenigstens eine Neigung des Kraftfahrzeugs um dessen Fahrzeugquerrichtung, insbesondere bei einem Antreiben beziehungsweise einem Anfahren, ermittelt wird. Alternativ oder zusätzlich wird wenigstens eine, insbesondere bei dem Antreiben beziehungsweise Anfahren, auf das Kraftfahrzeug, insbesondere in Fahrzeugquerrichtung und/oder in Fahrzeuglängsrichtung, wirkende Beschleunigung mittels wenigstens eines Beschleunigungssensors des Kraftfahrzeugs ermittelt beziehungsweise erfasst. Die Neigung des Kraftfahrzeugs wird beispielsweise dadurch ermittelt, dass mittels des Beschleunigungssensors eine auf das Kraftfahrzeug wirkende Beschleunigung erfasst wird, wobei die Neigung in Abhängigkeit von der erfassten Beschleunigung ermittelt wird.

Dabei wird das Lager in Abhängigkeit von der ermittelten Neigung und optional in Abhängigkeit von der ermittelten Beschleunigung überwacht. Insbesondere wird das Drehmoment, insbesondere das Anfahrmoment, in Abhängigkeit von der Neigung und optional in Abhängigkeit von der Beschleunigung ermittelt. Hierdurch ist es möglich, Werte des Drehmoments, die dadurch ermittelt wurden, dass das Kraftfahrzeug auf einer horizontalen Ebene angetrieben beziehungsweise angefahren wurde, mit solchen Werten des Drehmoments zu vergleichen, die ermittelt wurden, indem das Kraftfahrzeug eine Steigung hinauf angetrieben beziehungsweise angefahren und/oder ein Gefälle hinab angetrieben beziehungsweise angefahren wurde, da bei der Ermittlung des Drehmoments beziehungsweise der Werte die Neigung beziehungsweise Beschleunigung und somit die Umstände berücksichtigt wurden. Ist das Kraftfahrzeug beispielsweise zunächst auf einem Gefälle geparkt, und wird dann das Kraftfahrzeug derart angetrieben, insbesondere angefahren, dass das Kraftfahrzeug das Gefälle hinab angetrieben, insbesondere angefahren, wird, so kann daraus resultieren, dass das Drehmoment kleiner ist als wenn das Kraftfahrzeug auf einer horizontalen Ebene angetrieben, insbesondere angefahren, wird. Durch Berücksichtigung der Neigung des Kraftfahrzeugs kann nun erkannt werden, ob ein etwaiger Unterschied zwischen dem Drehmoment beziehungsweise den Werten des Drehmoments nur an dem Gefälle oder an dem Gefälle und an einer Verschleißzunahme des Lagers liegt. Hierdurch ist es möglich, das Lager in zumindest nahezu jeder Situation, in welcher das Kraftfahrzeug angetrieben, insbesondere angefahren, wird, zu überprüfen, sodass das Lager zumindest nahezu kontinuierlich überwacht werden kann. Dadurch kann ein etwaig übermäßiger Verschleiß des Lagers besonders frühzeitig erkannt werden.

Außerdem werden bei dem Antreiben, insbesondere bei dem Anfahren, Wirbelstromverluste und/oder Luftreibungsverluste ermittelt , wobei das Lager in Abhängigkeit von den ermittelten Wirbelstromverlusten und/oder Luftreibungsverlusten überwacht wird. Das Drehmoment, insbesondere das Anfahrmoment, wird in Abhängigkeit von den ermittelten Wirbelstromverlusten und/oder Luftreibungsverlusten ermittelt. Dieser Ausführungsform liegt die Erkenntnis zugrunde: Die elektrische Maschine beziehungsweise ein elektrischer Antrieb eines Kraftfahrzeugs weist ein Schleppmoment auf, welches sich üblicherweise aus Verlusten eines Eisenkreises beziehungsweise aus Wirbelstromverlusten, das heißt aus durch Wirbelströme verursachten Verlusten, aus Luftreibungsverlusten und aus Lagerreibungsverlusten zusammensetzt. Mit anderen Worten umfasst das Schleppmoment zumindest Wirbelstromverluste, Luftreibungsverluste und Lagerreibungsverluste.

Die Lagerreibungsverluste resultieren beispielsweise aus dem zuvor genannten Lagerreibmoment. Beispielsweise muss zumindest das Schleppmoment überwunden werden, um die elektrische Maschine, insbesondere deren Rotor, zu drehen, insbesondere ohne das Kraftfahrzeug anzutreiben. Um somit das Kraftfahrzeug anzutreiben, insbesondere anzufahren, muss durch Versorgen der elektrischen Maschine mit dem Wechselstrom das Schleppmoment sowie -gegebenenfalls ein zusätzliches Antriebsdrehmoment überwunden werden. Das Antriebsmoment ist beispielsweise das zuvor genannte Drehmoment, insbesondere das zuvor genannte und auch als Anfahrdrehmoment bezeichnete Anfahrmoment. Die Wirbelstromverluste und die Luftreibungsverluste nehmen mit zunehmender Drehzahl der elektrischen Maschine, insbesondere des Rotors, zu, wobei jedoch die Lagerreibungsverluste beziehungsweise das Lagerreibmoment über der Drehzahl zumindest im Wesentlichen konstant bleiben beziehungsweise bleiben beziehungsweise bleibt Steigt nun, insbesondere bei gleichen oder vergleichbaren Bedingungen, das Drehmoment, insbesondere das Anfahrmoment, so kann darauf rückgeschlossen werden, dass das Lagerreibmoment und somit der Verschleiß des Lagers steigt. Hintergrund ist, dass das Drehmoment beziehungsweise das Anfahrmoment das Schleppmoment und somit das Lagerreibmoment umfasst. Da beispielsweise die Neigung und/oder optional die Beschleunigung und/oder die Drehzahl erfasst und bei der Ermittlung des Drehmoments berücksichtigt werden, kann das Drehmoment in unterschiedlichen Situationen, in denen das Kraftfahrzeug angetrieben, insbesondere angefahren, wird, ermittelt werden, sodass beispielsweise in diesen unterschiedlichen Situationen jeweilige Werte des Drehmoments ermittelt werden können. Durch Berücksichtigung der Neigung und optional der Beschleunigung und/oder Drehzahl können die Situationen und somit die Werte miteinander vergleichbar sein beziehungsweise miteinander vergleichbar gemacht werden, da beispielsweise erkannt werden kann, dass etwaige Veränderungen des Drehmoments beziehungsweise der Werte nicht an den unterschiedlichen Situationen und somit nicht an unterschiedlichen Beschleunigungen und/oder Drehzahlen und/oder Neigungen, sondern Veränderungen des Lagerreibmoments liegen. Somit kann das Lager besonders umfangreich und präzise überwacht werden.

Als besonders vorteilhaft hat es sich gezeigt, wenn in Abhängigkeit von dem ermittelten Drehmoment mittels einer Ausgabeeinrichtung des Kraftfahrzeugs wenigstens ein, insbesondere von einer Person optisch und/oder akustisch und/oder haptisch wahrnehmbares, Hinweissignal ausgegeben wird. Beispielsweise wird das Hinweissignal ausgegeben, wenn das Drehmoment den Grenzwert überschreitet. Durch das Hinweissignal kann die Person, welche beispielsweise der Fahrer des Kraftfahrzeugs ist, darauf hingewiesen werden, dass das Lager einen übermäßigen Verschleiß aufweist. Mit anderen Worten kann beispielsweise die Person durch Ausgeben des Hinweissignals dazu angeleitet oder angeregt werden, mit dem Kraftfahrzeug eine Werkstatt aufzusuchen, um das Lager warten beziehungsweise austauschen zu lassen. Somit kann die Person das Lager warten oder austauschen lassen, bevor es zu einem Ausfall des Lagers und einem Schaden der elektrischen Maschine kommt.

Dabei hat es sich als besonders vorteilhaft gezeigt, wenn das Hinweissignal im Innenraum des Kraftfahrzeugs ausgegeben wird. Dadurch kann die Person beziehungsweise der Fahrer des Kraftfahrzeugs besonders frühzeitig darauf hingewiesen werden, dass das Lager zu reparieren beziehungsweise auszutauschen ist. Diesen Ausführungsformen liegt die Erkenntnis zugrunde, dass die Wartung beziehungsweise der Austausch des Lagers dann, wenn das Lager an sich noch funktionstüchtig und noch nicht ausgefallen ist und es noch nicht zu einem Schaden der elektrischen Maschine gekommen ist, das Lager besonders einfach, zeit- und kostengünstig gewartet beziehungsweise ausgetauscht werden kann. Insbesondere kann das Kraftfahrzeug zu der Werkstatt gefahren werden und muss nicht zeit- und kostenaufwändig oder unter Zuhilfenahme von Hilfsmitteln transportiert werden.

Um das Drehmoment besonders präzise ermitteln und somit das Lager besonders vorteilhaft überwachen zu können, ist es in weiterer Ausgestaltung der Erfindung vorgesehen, dass das Verfahren bei einem Anfahrvorgang durchgeführt wird, bei welchem das zunächst stillstehende Kraftfahrzeug durch das Antreiben des Kraftfahrzeugs angefahren und dadurch in Bewegung versetzt wird. Dabei wird als das Drehmoment ein zum Anfahren des Kraftfahrzeugs erforderliches Anfahrdrehmoment ermittelt. Mit anderen Worten ist es hierbei vorgesehen, dass die elektrische Maschine bei dem genannten Anfahrvorgang mit dem elektrischen Wechselstrom versorgt wird, wodurch das Kraftfahrzeug mittels des Elektromotors angetrieben und dadurch angefahren wird. Des Weiteren ist es somit vorgesehen, dass der bereitgestellte Wechselstrom bei dem Anfahrvorgang erfasst wird. Dieser Ausführungsform liegt die Erkenntnis zugrunde, dass das Drehmoment bei einem jeweiligen Anfahrvorgang des Kraftfahrzeugs besonders vorteilhaft ermittelt werden kann. Mit anderen Worten kann das Drehmoment bei jeweiligen, aufeinanderfolgenden Anfahrvorgängen besonders vorteilhaft ermittelt werden. Wieder mit anderen Worten ausgedrückt können beispielsweise bei jeweiligen, aufeinanderfolgenden Anfahrvorgängen jeweilige Werte des Drehmoments ermittelt werden, wobei die Werte besonders gut miteinander verglichen werden können. Dadurch kann anhand des Vergleichs der Werte der zuvor genannte Trend besonders gut erkannt werden. Mit anderen Worten kann anhand des Vergleichs der Werte besonders gut erkannt werden, ob das Drehmoment beispielsweise aufgrund einer Verschleißzunahme des Lagers zunimmt. Dies ist möglich, da bei einem Anfahrvorgang beziehungsweise bei den Anfahrvorgängen stets besonders gut miteinander vergleichbare Bedingungen vorliegen. Wird beispielsweise anhand der Werte beziehungsweise durch Vergleichen der Werte erkannt, dass das Drehmoment beziehungsweise die Werte zunehmen, so lässt sich dies mit einer besonders hohen Sicherheit den Rückschluss zu, dass die Zunahme der Werte beziehungsweise des Drehmoments tatsächlich an zunehmendem Verschleiß des Lagers und nicht etwa an anderen Effekten liegt. Dadurch kann das Lager besonders präzise überwacht werden.

Eine weitere Ausführungsform zeichnet sich dadurch aus, dass zum Antreiben, insbesondere zum Anfahren, des Kraftfahrzeugs wenigstens eine Welle des Kraftfahrzeugs mittels des Elektromotors angetrieben und dadurch um eine Drehachse gedreht wird, sodass die Welle eine, insbesondere gegenüber null größere Drehzahl aufweist. Dabei wird mittels wenigstens eines zusätzlich zu dem Wechselstromsensor vorgesehenen Drehzahlsensor des Kraftfahrzeugs die Drehzahl der Welle erfasst, wobei das Lager auch in Abhängigkeit von der erfassten Drehzahl überwacht wird. Durch Berücksichtigen der Drehzahl bei dem Ermitteln des Drehmoments beziehungsweise bei der Überwachung des Lagers können vergleichbare Bedingungen geschaffen werden beziehungsweise es kann sichergestellt werden, dass eine etwaige Zunahme des Drehmoments tatsächlich an einer etwaigen Verschleißzunahme des Lagers und nicht etwa auch an anderen Effekten liegt.

Dabei hat es sich als besonders vorteilhaft gezeigt, dass das Anfahrdrehmoment auch in Abhängigkeit von der erfassten Drehzahl ermittelt wird.

Dadurch kann beispielsweise eine Haftreibung in dem Lager unberücksichtigt bleiben, sodass etwaige Fehldiagnosen vermieden werden können.

Bei einer besonders vorteilhaften Ausführungsform der Erfindung wird wenigstens eine Position des Kraftfahrzeugs auf der Erde, insbesondere bei dem Antreiben beziehungsweise bei dem Anfahren, ermittelt, wobei das Lager in Abhängigkeit von der ermittelten Position überwacht wird. Die Position wird beispielsweise mittels einer Navigationseinrichtung des Kraftfahrzeugs und/oder satellitengestützt ermittelt. Insbesondere ist es denkbar, dass das Drehmoment, insbesondere das Anfahrdrehmoment, in Abhängigkeit von der Position ermittelt, insbesondere berechnet, wird. Dadurch können örtliche beziehungsweise lokale Effekte, die zu einer Veränderung beziehungsweise Beeinträchtigung des Drehmoments führen können, berücksichtigt werden und beispielsweise bei einer Berechnung des Drehmoments herausgerechnet werden, sodass erkannt werden kann, dass eine etwaige Zunahme des Drehmoments tatsächlich an einer etwaigen Zunahme des Verschleißes des Lagers und nicht etwa an etwaigen örtlichen Effekten oder Gegebenheiten liegt.

Ein zweiter Aspekt der Erfindung betrifft ein vorzugsweise als Kraftwagen, insbesondere als Personenkraftwagen, ausgebildetes Kraftfahrzeug, welches zum Durchführen eines erfindungsgemäßen Verfahrens ausgebildet ist. Zu der Erfindung gehören auch Weiterbildungen des erfindungsgemäßen Kraftfahrzeugs, die Merkmalen aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Seitenansicht eines erfindungsgemäßen Kraftfahrzeugs;
- Fig. 2: eine schematische Darstellung eines Antriebsstrangs des Kraftfahrzeugs, welches mittels des Antriebsstrangs elektrisch angetrieben werden kann;
- Fig. 3: ausschnittsweise eine schematische Seitenansicht einer Welle des Antriebsstrangs; und
- Fig. 4: ein Diagramm zum Veranschaulichen eines erfindungsgemäßen Verfahrens zum Überwachen wenigstens eines Lagers des Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden. Daher soll die Erfindung auch andere als die dargestellten Kombinationen der Merkmale der Ausführungsformen umfassen. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

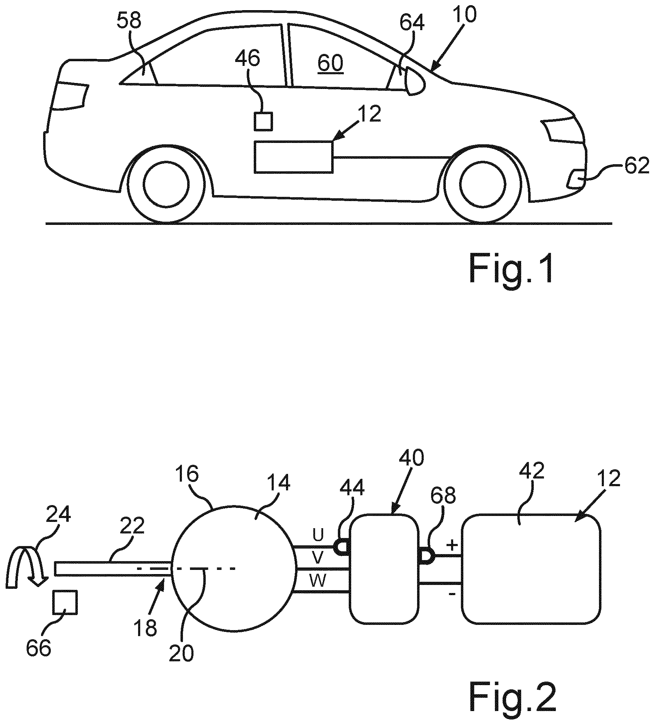

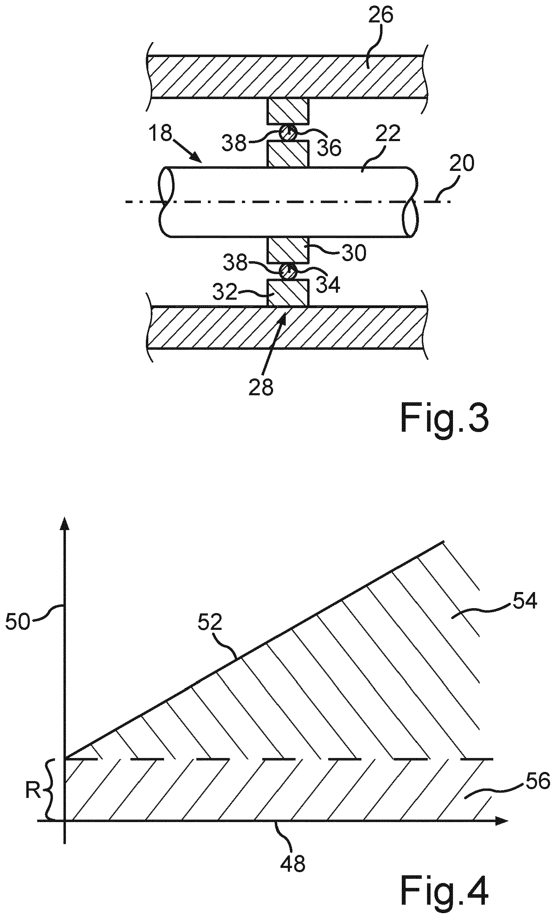

Fig. 1 zeigt in einer schematischen Seitenansicht ein als Kraftwagen, insbesondere als Personenkraftwagen, ausgebildetes Kraftfahrzeug 10. Das Kraftfahrzeug 10 ist als Hybrid- oder Kraftfahrzeug ausgebildet und weist einen besonders gut in Zusammenschau mit Fig. 2 erkennbaren Antriebsstrang 12 auf, welcher auch als elektrischer Antriebsstrang oder elektrischer Antrieb bezeichnet wird. Mittels des Antriebsstrangs 12 kann das Kraftfahrzeug 10, insbesondere elektrisch, angetrieben werden. Hierzu umfassen der Antriebsstrang 12 und somit das Kraftfahrzeug 10 eine elektrische Maschine 14, mittels welcher das Kraftfahrzeug elektrisch angetrieben werden kann. Die elektrische Maschine 14 umfasst einen Stator 16 und einen teilweise erkennbaren Rotor 18, welcher beispielsweise von dem Stator 16 antreibbar und dadurch um eine Maschinendrehachse 20 relativ zu dem Stator 16 drehbar ist. Wie besonders gut in Zusammenschau mit Fig. 3 erkennbar ist, umfasst der Rotor 18 eine auch als Rotorwelle bezeichnete Welle 22, welche - wie in Fig. 2 durch einen Pfeil 24 veranschaulicht ist - um die Maschinendrehachse 20 relativ zu dem Stator 16 drehbar ist. Außerdem ist aus Fig. 3 ausschnittsweise ein Gehäuse 26 der elektrischen Maschine 14 erkennbar, wobei der Stator 16 beispielsweise an dem Gehäuse 26 festgelegt ist. Somit sind der Rotor 18 und somit die Welle 22 um die Maschinendrehachse 20 relativ zu dem Gehäuse 26 drehbar. Das Kraftfahrzeug 10 umfasst auch wenigstens ein aus Fig. 3 erkennbares Lager 28, welches vorliegend ein Wälzlager, insbesondere als ein Kugellager, ausgebildet ist. Bei dem in den Fig. veranschaulichten Ausführungsbeispiel ist das Lager 28 Bestandteil der elektrischen Maschine 14 und somit ein Lager der elektrischen Maschine 14, wobei das Lager 28 in dem Gehäuse 26 angeordnet ist. Dabei ist die Welle 22 mittels des Lagers 28 beziehungsweise über das Lager 28 drehbar an dem Gehäuse 26 gelagert. Insbesondere ist die Welle 22 entlang ihrer radialen Richtung über das Lager 28 an dem Gehäuse 26 abgestützt oder abstützbar.

Das Lager 28 weist beispielsweise einen als Innenring 30 ausgebildeten ersten Lagerring auf, welcher beispielsweise drehfest mit der Welle 22 verbunden ist. Außerdem umfasst das Lager 28 einen zweiten Lagerring in Form eines Außenrings 32, welcher beispielsweise drehfest mit dem Gehäuse 26 verbunden ist. Die Lagerringe weisen jeweilige Laufbahnen 34 und 36 auf. Das Lager 28 umfasst darüber hinaus Wälzkörper 38, welche vorliegend als Kugeln ausgebildet sind. Wird nun die Welle 22 um die Maschinendrehachse 20 relativ zu dem Gehäuse 26 gedreht, so resultiert daraus eine um die Maschinendrehachse 20 erfolgende Relativdrehung zwischen den Lagerringen. Dadurch wälzen die Wälzkörper 38 an den Laufbahnen 34 und 36 ab.

Der Antriebsstrang 12 und somit das Kraftfahrzeug 10 umfassen darüber hinaus eine der elektrischen Maschine 14 zugeordnete Leistungselektronik 40, über welche die elektrische Maschine 14 mit elektrischer Energie beziehungsweise elektrischem Strom versorgbar ist. Insbesondere ist die Leistungselektronik 40 dazu ausgebildet, elektrischen Strom in Form von elektrischem Wechselstrom bereitzustellen. Die elektrische Maschine 14 wird dabei mit dem von der Leistungselektronik 40 bereitgestellten Wechselstrom versorgt, wodurch die elektrische Maschine 14 in einem Motorbetrieb und somit als ein Elektromotor betrieben wird. Der Elektromotor stellt über den Rotor 18 und dabei über die auch als Rotorwelle bezeichnete Welle 22 Antriebsdrehmomente bereit, mittels welchen das Kraftfahrzeug 10 elektrisch angetrieben werden kann.

Aus Fig. 2 ist erkennbar, dass die elektrische Maschine 14 vorliegend als mehrphasige elektrische Maschine ausgebildet ist und somit mehrere elektrische Phasen aufweist. Vorliegend ist die elektrische Maschine 14 als dreiphasige elektrische Maschine ausgebildet, sodass die elektrische Maschine 14 drei Phasen u, v und w aufweist. Der Wechselstrom ist somit ein dreiphasiger Wechselstrom mit den genau drei Phasen u, v, und w.

Der Antriebsstrang 12 und somit das Kraftfahrzeug 10 umfassen darüber hinaus einen zum Speichern von elektrischer Energie beziehungsweise elektrischem Strom ausgebildeten Energiespeicher 42, welcher beispielsweise als Batterie, insbesondere als Hochvolt-Batterie (HV-Batterie), ausgebildet ist. Insbesondere sind die elektrische Maschine 14 und der Energiespeicher 42 als Hochvoltkomponenten ausgebildet, welcher eine elektrische Spannung, insbesondere eine elektrische Betriebsspannung, aufweisen, welche größer als 50 Volt ist. Vorzugsweise beträgt die elektrische Spannung mehrere hundert Volt, um dadurch besonders große elektrische Leistungen zum elektrischen Antreiben des Kraftfahrzeugs 10 realisieren zu können. Dabei ist in Fig. 2 ein elektrischer Pluspol des Energiespeichers 42 mit + bezeichnet, wobei ein elektrischer Minuspol des Energiespeichers 42 mit - bezeichnet ist.

Um die elektrische Maschine 14 in dem Motorbetrieb zu betreiben, stellt der Energiespeicher 42 elektrischen Gleichstrom (DC) bereit, wobei die Leistungselektronik 40 mit dem von dem Energiespeicher 42 bereitgestellten Gleichstrom versorgt wird. Mit anderen Worten empfängt die Leistungselektronik 40 den von dem Energiespeicher 42 bereitgestellten Gleichstrom. Der von dem Energiespeicher 42 bereitgestellte und von der Leistungselektronik 40 empfangene Gleichstrom wird mittels der Leistungselektronik 40 in den zuvor genannten Wechselstrom umgewandelt, welcher von der Leistungselektronik 40 bereitgestellt, an die elektrische Maschine 14 übertragen und von der elektrischen Maschine 14 empfangen wird. Auf diese Weise wird die elektrische Maschine 14 mit dem von der Leistungselektronik 40 bereitgestellten Wechselstrom versorgt.

Im Folgenden wird ein Verfahren zum Überwachen zumindest des Lagers 28 beschrieben, wobei das Lager 28 mittels des Verfahrens besonders präzise überwacht werden kann. Bei einem ersten Schritt des Verfahrens wird die elektrische Maschine 14 mit dem elektrischen Wechselstrom versorgt, welcher von der der elektrischen Maschine 14 zugeordneten Leistungselektronik 40 bereitgestellt wird. Hierdurch wird die elektrische Maschine 14 als der zuvor genannte Elektromotor betrieben, mittels welchem das Kraftfahrzeug 10 angetrieben, insbesondere angefahren, wird.

Bei einem zweiten Schritt des Verfahrens wird der von der Leistungselektronik 40 bereitgestellte Wechselstrom mittels wenigstens eines in Fig. 2 besonders schematisch dargestellten Wechselstromsensors 44 erfasst. Der Wechselstromsensor 44 ist beispielsweise Bestandteil der Leistungselektronik 40 und dabei beispielsweise in der Leistungselektronik 40, insbesondere in einem Gehäuse der Leistungselektronik 40, angeordnet. Der auch als AC oder AC-Strom bezeichnete Wechselstrom kann mittels des auch als AC-Sensor bezeichneten Wechselstromsensors 44 besonders präzise erfasst werden.

Bei einem dritten Schritt des Verfahrens wird in Abhängigkeit von dem erfassten Wechselstrom wenigstens ein Drehmoment ermittelt, insbesondere berechnet, welches zum Antreiben, insbesondere Anfahren, des Kraftfahrzeugs 10 von dem Elektromotor, insbesondere über den Rotor 18 und dabei über die Welle 22, bereitgestellt wird. Beispielsweise wird das Drehmoment mittels einer in Fig. 1 besonders schematisch dargestellten, elektronischen Recheneinrichtung 46 des Kraftfahrzeugs 10, insbesondere des Antriebsstrangs 12, ermittelt, insbesondere berechnet. Hierzu stellt beispielsweise der Wechselstromsensor 44 wenigstens ein, insbesondere elektrisches, Sensorsignal bereit, welches von der elektronischen Recheneinrichtung 46 empfangen wird. In Abhängigkeit von dem empfangenen Sensorsignal ermittelt, insbesondere berechnet, die elektronische Recheneinrichtung 46 das Drehmoment. Insbesondere ermittelt, insbesondere berechnet, die elektronische Recheneinrichtung 46 wenigstens einen das Drehmoment charakterisierenden und auch als Drehmomentwert bezeichneten Wert des Drehmoments. Bei einem vierten Schritt des Verfahrens wird das Lager 28 in Abhängigkeit von dem ermittelten Drehmoment, das heißt in Abhängigkeit von dem Drehmomentwert überwacht. Das genannte Drehmoment ist beispielsweise ein zum Anfahren des zunächst stillstehenden Kraftfahrzeugs 10 erforderliches und auch als Anfahrmoment oder Anfahrdrehmoment bezeichnetes Drehmoment, welches bei einem Anfahrvorgang des Kraftfahrzeugs von der elektrischen Maschine 14 bereitgestellt wird beziehungsweise bereitzustellen ist, um das zunächst stillstehende Kraftfahrzeug anzufahren und somit in Bewegung zu versetzen. Da der Wechselstrom mittels des Wechselstromsensors 44 besonders präzise erfasst werden kann beziehungsweise erfasst wird, kann das Drehmoment besonders präzise ermittelt werden. Das ermittelte Drehmoment hängt dabei von Verlusten, insbesondere von Reibverlusten, des Lagers 28 ab, wobei diese Reibverluste des Lagers 28 von einem auch als Reibmoment bezeichneten Lagerreibmoment des Lagers 28 abhängen beziehungsweise durch das Lagerreibmoment bewirkt werden. Somit umfasst das Drehmoment das Lagerreibmoment des Lagers 28. Wird nun beispielsweise das Drehmoment mehrmals aufeinanderfolgend ermittelt, sodass jeweilige Drehmomentwerte des Drehmoments ermittelt werden, so kann anhand der Drehmomentwerte insbesondere durch Vergleichen der Drehmomentwerte ermittelt werden, ob sich die Drehmomentwerte voneinander unterscheiden. Insbesondere kann dadurch ermittelt werden, ob die Drehmomentwerte beziehungsweise das Drehmoment zunimmt. Eine etwaige Zunahme des Drehmoments lässt einen Rückschluss darauf zu, dass das Lagerreibmoment des Lagers 28 und somit dessen Verschleiß zunimmt. Auf diese Weise kann besonders frühzeitig ein übermäßiger Verschleiß des Lagers 28 erkannt werden, sodass eine Wartung oder ein Austausch des Lagers 28 bewirkt oder angeregt werden kann, bevor es zu einem Ausfall des Lagers 28 und somit zu einem Schaden des Antriebsstrangs 12 kommt.

Fig. 4 zeigt ein Diagramm, auf dessen Abszisse 48 die Drehzahl der elektrischen Maschine 14, insbesondere des Rotors 18, aufgetragen ist. Auf der Ordinate 50 des Diagramms ist ein Schleppmoment der elektrischen Maschine 14 aufgetragen. Ein in das Diagramm eingetragener Verlauf 52 veranschaulicht einen Verlauf des Schleppmoments über der Drehzahl. Das Schleppmoment setzt sich zusammen aus Wirbelstromverlusten und Luftreibungsverlusten, deren Beitrag zu dem Schleppmoment beispielsweise in Fig. 4 durch eine schraffierte Fläche 54 unter dem Verlauf 52 veranschaulicht ist. Außerdem setzt sich das Schleppmoment zusammen aus den zuvor genannten und auch als Lagerreibungsverluste bezeichneten Reibverlusten, deren Beitrag zu dem Schleppmoment in Fig. 4 durch eine weitere schraffierte Fläche 56 unter dem Verlauf 52 veranschaulicht ist. Aus Fig. 4 ist erkennbar, dass die Wirbelstromverluste und Luftreibungsverluste mit zunehmender Drehzahl des Rotors 18 zunehmen, während jedoch die Lagerreibungsverluste und somit das in Fig. 4 mit R bezeichnete und auch als Lagermoment bezeichnete Lagerreibmoment über der Drehzahl zumindest im Wesentlichen konstant bleiben. Die Luftreibungsverluste und auch als Eisenverluste bezeichnete Wirbelstromverluste sind null, wenn die Drehzahl null ist. Da nun das Drehmoment das Schleppmoment und das Schleppmoment das Lagermoment umfasst, kann durch, insbesondere zumindest im Wesentlichen kontinuierliches, Überwachen des Drehmoments das Lagermoment überwacht werden, wodurch das Lager 28 und somit dessen Verschleiß überwacht werden können. Vorteilhaft hierbei ist eine, insbesondere zumindest im Wesentlichen kontinuierliche, Überwachung beziehungsweise Aufzeichnung des Drehmoments, um beispielsweise Schwankungen durch Hangneigung und/oder unterschiedlichem Untergrund zu kompensieren beziehungsweise auszumitteln. Ziel ist beispielsweise eine Trendermittlung. Wird beispielsweise anhand der Drehmomentwerte ein solcher Trend erkannt, dass die Drehmomentwerte und somit das Drehmoment zunehmen, so kann auf eine Zunahme des Verschleißes des Lagers 28 rückgeschlossen werden. Übersteigt beispielsweise das Drehmoment einen vorgebbaren Grenzwert, so kann darauf rückgeschlossen werden, dass der Verschleiß des Lagers 28 eine vorgegebene oder vorgebbare Grenze überschreitet oder überschritten hat. In der Folge kann beispielsweise der Fahrer des Kraftfahrzeugs 10 angeregt werden, um das Lager 28 warten beziehungsweise austauschen zu lassen.

Hierzu wird beispielsweise in Abhängigkeit von dem ermittelten Drehmoment mittels einer in Fig. 1 besonders schematisch dargestellten Ausgabeeinrichtung 58 des Kraftfahrzeugs 10 wenigstens ein von dem Fahrer optisch und/oder akustisch und/oder haptisch wahrnehmbares Hinweissignal ausgegeben, wobei die Ausgabeeinrichtung 58 im Innenraum 60 des Kraftfahrzeugs 10 angeordnet ist. Somit wird das Hinweissignal im Innenraum 60 ausgegeben.

Insbesondere von Vorteil ist es, wenn beispielsweise mittels wenigstens eines oder mehrerer Lagesensoren des Kraftfahrzeugs 10 etwaige Neigungen des Kraftfahrzeugs 10 und dessen Fahrzeugquerrichtung ermittelt werden, um beispielsweise Verfälschungen durch Steigungen und/oder Gefälle zu kompensieren beziehungsweise auszuschließen. Somit ist es beispielsweise vorgesehen, dass wenigstens eine Neigung des Kraftfahrzeugs 10 und dessen Fahrzeugquerrichtung insbesondere bei dem Antreiben beziehungsweise Anfahren und/oder wenigstens eine bei dem Antreiben beziehungsweise Anfahren auf das Kraftfahrzeug 10 wirkende Beschleunigung mittels wenigstens eines in Fig. 1 besonders schematisch dargestellten und beispielsweise als Beschleunigungssensor ausgebildeten Sensors 62 des Kraftfahrzeugs 10 erfasst wird, wobei das Lager 28 in Abhängigkeit von der ermittelten Neigung und optional Beschleunigung überwacht wird. Insbesondere wird das Drehmoment in Abhängigkeit von der erfassten Neigung und optional Beschleunigung ermittelt.

Alternativ oder zusätzlich kann vorgesehen sein, dass mittels einer in Fig. 1 besonders schematisch dargestellten Navigationseinrichtung 64 des Kraftfahrzeugs 10, insbesondere satellitengestützt, wenigstens eine Position des Kraftfahrzeugs 10 auf der Erde ermittelt wird. Dabei wird das Lager 28 in Abhängigkeit von der ermittelten Position überwacht, wobei beispielsweise das Drehmoment in Abhängigkeit von der ermittelten Position ermittelt wird. Außerdem hat es sich als besonders vorteilhaft gezeigt, wenn mittels eines zusätzlich zu dem Wechselstromsensor 44 vorgesehenen Drehzahlsensors 66 des Kraftfahrzeugs 10, insbesondere des Antriebsstrangs 12, eine aus dem Antreiben der Welle 22 resultierende Drehzahl der Welle 22 erfasst wird, wobei das Lager 28 in Abhängigkeit von der erfassten Drehzahl der Welle 22 überwacht wird. Insbesondere wird das Drehmoment vorzugsweise in Abhängigkeit von der erfassten Drehzahl der Welle 22 ermittelt.

Vorzugsweise ist die elektrische Maschine 14 frei von Drehmomentmessflanschen und/oder Drehmomentsensoren, um die Teileanzahl, den Bauraumbedarf und die Kosten sowie das Gewicht besonders gering halten zu können. Elektrische Antriebe und somit die elektrische Maschine 14 haben jedoch die physikalische Eigenschaft, dass Drehmoment und elektrischer Strom direkt proportional zueinander sind. Die Leistungselektronik 40, die den Wechselstrom für die elektrische Maschine 14 bereitstellt, umfasst dabei wenigstens einen oder mehrere sehr genaue Stromsensoren. Einer der Stromsensoren beziehungsweise der Stromsensor der elektrischen Maschine 14 ist dabei der Wechselstromsensor 44. Wird nun der erfasste Wechselstrom, der zum beziehungsweise beim Anfahren beziehungsweise Antreiben benötigt wird, ausgewertet, insbesondere derart, dass anhand des erfassten Wechselstroms das Drehmoment ermittelt, insbesondere berechnet, wird, kann dadurch, dass das Drehmoment das Schleppmoment und das Schleppmoment das Lagermoment umfasst, Rückschlüsse auf das Lagermoment und in der Folge auf den Verschleiß des Lagers 28 ziehen.

Um beispielsweise Fehldiagnosen aufgrund von Haftreibung, insbesondere in dem Lager 28, zu vermeiden, wird beispielsweise auf den Drehzahlsensor 66 rückgegriffen. Der Drehzahlsensor 66 kann die Drehzahl der Welle 22 und somit des Rotors 18 und somit des Lagers 28 hochgenau erfassen. Somit kann anhand der mittels des Drehzahlsensors 66 erfassten Drehzahl erkannt werden, wann die Haftreibung überwunden ist. Somit ist vorzugsweise das Drehmoment ermittelt, nachdem die Haftreibung überwunden wurde. Hierzu ist beispielsweise der Drehzahlsensor 66 als ein Resolver oder als ein vergleichbarer Sensor ausgebildet, um beispielsweise bereits kleinste Winkelveränderungen von größer oder gleich 0,01 Grad der Welle 22 detektieren zu können. Dadurch kann die Drehzahl mittels des Drehzahlsensors 66 besonders präzise erfasst werden.

Vorliegend umfasst das Kraftfahrzeug 10, insbesondere der Antriebsstrang 12, auch einen Gleichstromsensor 68, mittels welchem der von dem Energiespeicher 42 bereitgestellte Gleichstrom erfassbar ist beziehungsweise erfasst wird. Insbesondere kann mittels des Gleichstromsensors 68 eine Menge des von dem Energiespeicher 42 bereitgestellten und somit aus dem Energiespeicher 42 entnommenen Gleichstroms ermittelt werden. Dabei ist es denkbar, dass das Drehmoment auch in Abhängigkeit von dem mittels des Gleichstromsensors 68 erfassten Gleichstrom ermittelt wird, wodurch das Drehmoment besonders präzise ermittelt werden kann.

## Patentansprüche

1. Verfahren zum Überwachen wenigstens eines Lagers (28) eines das Lager (28) und wenigstens eine elektrische Maschine (14) aufweisenden und mittels der elektrischen Maschine (14) antreibbaren Kraftfahrzeugs (10), mit den Schritten:
- Versorgen der elektrischen Maschine (14) mit elektrischem Wechselstrom, welcher von einer der elektrischen Maschine (14) zugeordneten Leistungselektronik (40) des Kraftfahrzeugs (10) bereitgestellt wird, wodurch die elektrische Maschine (14) als ein Elektromotor (14) betrieben wird, mittels welchem das Kraftfahrzeug (10) angetrieben wird;
- Erfassen des von der Leistungselektronik (40) bereitgestellten Wechselstroms mittels wenigstens eines Wechselstromsensors (44);
- Ermitteln wenigstens eines Drehmoments, welches zum Antreiben des Kraftfahrzeugs (10) von dem Elektromotor (14) bereitgestellt wird, in Abhängigkeit von dem erfassten Wechselstrom,
wobei bei dem Antreiben auftretende Wirbelstromverluste und/oder Luftreibungsverluste ermittelt werden, wobei das Lager (28) in Abhängigkeit von den ermittelten Wirbelstromverlusten und/oder Luftreibungsverlusten überwacht wird, wobei das Drehmoment in Abhängigkeit von den ermittelten Wirbelstromverlusten und/oder Luftreibungsverlusten ermittelt wird; und
- Überwachen des Lagers (28) in Abhängigkeit von dem ermittelten Drehmoment, wobei das Lager (28) immer dann überwacht wird, wenn das Kraftfahrzeug (10) von dem Elektromotor (14) angetrieben wird, wobei eine Veränderung des Drehmoments ermittelt oder erkannt wird, wobei aus der Veränderung des Drehmoments auf einen zunehmenden Verschleiß des Lagers (28) rückgeschlossen wird, wobei wenigstens eine Neigung des Kraftfahrzeugs (10) um dessen Fahrzeugquerrichtung mittels wenigstens eines Sensors (62) des Kraftfahrzeugs (10) ermittelt wird, wobei das Lager (28) in Abhängigkeit von der ermittelten Neigung überwacht wird, wobei durch Berücksichtigung der Neigung des Kraftfahrzeugs (10) erkannt wird, ob ein Unterschied zwischen Werten des Drehmoments nur an einem Gefälle oder an dem Gefälle und an der Verschleißzunahme des Lagers (28) liegt.

2. Verfahren nach Anspruch 1,
**dadurch gekennzeichnet, dass**
in Abhängigkeit von dem ermittelten Drehmoment mittels einer Ausgabeeinrichtung (58) des Kraftfahrzeug (10) wenigstens ein Hinweissignal ausgegeben wird.

3. Verfahren nach Anspruch 2,
**dadurch gekennzeichnet, dass**
das Hinweissignal im Innenraum (60) des Kraftfahrzeugs (10) ausgegeben wird.

4. Verfahren nach einem der vorhergehenden Ansprüche,
**dadurch gekennzeichnet, dass**
das Verfahren bei einem Anfahrvorgang durchgeführt wird, bei welchem das zunächst stillstehende Kraftfahrzeug (10) durch das Antreiben des Kraftfahrzeugs (10) angefahren und dadurch in Bewegung versetzt wird, wobei als das Drehmoment ein zum Anfahren des Kraftfahrzeugs (10) erforderliches und/oder von der elektrischen Maschine (14) bereitgestelltes Anfahrmoment ermittelt wird.

5. Verfahren nach einem der vorhergehenden Ansprüche,
**dadurch gekennzeichnet, dass**
zum Antreiben des Kraftfahrzeugs (10) wenigstens eine Welle (22) des Kraftfahrzeugs (10) angetrieben und dadurch um eine Drehachse (20) gedreht wird, wobei mittels wenigstens eines zusätzlich zu dem Wechselstromsensor (44) vorgesehenen Drehzahlsensors (66) des Kraftfahrzeugs (10) eine Drehzahl der Welle (22) erfasst wird, und wobei das Lager (28) auch in Abhängigkeit von der erfassten Drehzahl überwacht wird.

6. Verfahren nach den Ansprüchen 4 und 5,
**dadurch gekennzeichnet, dass**
das Anfahrdrehmoment auch in Abhängigkeit von der erfassten Drehzahl ermittelt wird.

7. Verfahren nach einem der vorhergehenden Ansprüche,
**dadurch gekennzeichnet, dass**
wenigstens eine Position des Kraftfahrzeugs (10) auf der Erde ermittelt wird, wobei das Lager (28) in Abhängigkeit von der Position überwacht wird.

8. Verfahren nach einem der vorhergehenden Ansprüche,
**dadurch gekennzeichnet, dass**
die wenigstens eine Neigung des Kraftfahrzeugs (10) um dessen Fahrzeugquerrichtung und/oder die wenigstens eine auf das Kraftfahrzeug (10) wirkende Beschleunigung mittels wenigstens eines Beschleunigungssensors (62) als dem Sensor (62) des Kraftfahrzeugs (10) ermittelt wird.

9. Kraftfahrzeug (10), welches zum Durchführen eines Verfahrens nach einem der vorhergehenden Ansprüche ausgebildet ist.

## Claims

1. Method for monitoring at least one bearing (28) of a motor vehicle (10), which has the bearing (28) and at least one electric machine (14) and can be driven by means of the electric machine (14), with the steps:
- supplying the electric machine (14) with alternating electric current, which is provided by power electronics (40), assigned to the electric machine (14), of the motor vehicle (10), whereby the electric machine (14) is operated as an electric motor (14), by means of which the motor vehicle (10) is driven;
- detecting the alternating current provided by the power electronics (40) by means of at least one alternating current sensor (44);
- determining at least one torque, which is provided by the electric motor (14) for driving the motor vehicle (10), as a function of the detected alternating current,
wherein eddy current losses and/or air friction losses occurring during the driving are determined, wherein the bearing (28) is monitored as a function of the determined eddy current losses and/or air friction losses, wherein the torque is determined as a function of the determined eddy current losses and/or air friction losses; and
- monitoring the bearing (28) as a function of the determined torque, wherein the bearing (28) is always monitored when the motor vehicle (10) is driven by the electric motor (14), wherein a change in the torque is determined or identified, wherein the change in the torque is used to infer increasing wear of the bearing (28), wherein at least one inclination of the motor vehicle (10) about its transverse vehicle direction is determined by means of at least one sensor (62) of the motor vehicle (10), wherein the bearing (28) is monitored as a function of the determined inclination, wherein, taking into account the inclination of the motor vehicle (10), it can be identified whether a difference between values of the torque is due only a gradient or to the gradient and the increase in wear of the bearing (28).

2. Method according to claim 1,
**characterized in that**
at least one information signal is output as a function of the determined torque by means of an output apparatus (58) of the motor vehicle (10).

3. Method according to claim 2,
**characterized in that**
the information signal is output in the interior (60) of the motor vehicle (10).

4. Method according to any one of the preceding claims,
**characterized in that**
the method is performed during a start-up process, in which the initially stationary motor vehicle (10) is started up by driving the motor vehicle (10) and is thereby set in motion, wherein a starting torque required for starting up the motor vehicle (10) and/or provided by the electric machine (14) is determined as the torque.

5. Method according to any one of the preceding claims,
**characterized in that**
for driving the motor vehicle (10), at least one shaft (22) of the motor vehicle (10) is driven and thereby rotated about an axis of rotation (20), wherein a rotational speed of the shaft (22) is detected by means of at least one rotational speed sensor (66) of the motor vehicle (10) provided in addition to the alternating current sensor (44), and wherein the bearing (28) is also monitored as a function of the detected rotational speed.

6. Method according to claims 4 and 5,
**characterized in that**
the start-up torque is also determined as a function of the detected rotational speed.

7. Method according to any one of the preceding claims,
**characterized in that**
at least one position of the motor vehicle (10) on the ground is determined, the bearing (28) being monitored as a function of the position.

8. Method according to any one of the preceding claims,
**characterized in that**
the at least one inclination of the motor vehicle (10) about its transverse vehicle direction and/or the at least one acceleration acting on the motor vehicle (10) is determined by means of at least one acceleration sensor (62) as the sensor (62) of the motor vehicle (10).

9. Motor vehicle (10), which is designed to perform a method according to any one of the preceding claims.

## Revendications

1. Procédé de surveillance d'au moins un palier (28) d'un véhicule à moteur (10) présentant le palier (28) et au moins une machine électrique (14) et pouvant être entraîné au moyen de la machine électrique (14), comprenant les étapes suivantes :
- l'alimentation de la machine électrique (14) en courant alternatif électrique qui est fourni par une électronique de puissance (40) associée à la machine électrique (14) du véhicule à moteur (10), selon lequel la machine électrique (14) fonctionne comme un moteur électrique (14), au moyen duquel le véhicule à moteur (10) est entraîné ;
- la détection du courant alternatif fourni par l'électronique de puissance (40) au moyen d'au moins un capteur de courant alternatif (44) ;
- la détermination d'au moins un couple qui est fourni pour l'entraînement du véhicule à moteur (10) par le moteur électrique (14), en fonction du courant alternatif détecté,
dans lequel des pertes par courant parasite et/ou des pertes dues au frottement de l'air survenant lors de l'entraînement, dans lequel le palier (28) est surveillé en fonction des pertes par courant parasite et/ou pertes dues au frottement de l'air déterminées, dans lequel le couple est déterminé en fonction des pertes par courant parasite et/ou des pertes dues au frottement de l'air déterminées ; et
- la surveillance du palier (28) en fonction du couple déterminé, dans lequel le palier (28) est toujours surveillé lorsque le véhicule à moteur (10) est entraîné par le moteur électrique (14), dans lequel une modification du couple est déterminée ou reconnue, dans lequel il est conclu à partir de la modification du couple à une usure croissante du palier (28), dans lequel au moins une inclinaison du véhicule à moteur (10) autour de son sens transversal de véhicule est déterminée au moyen d'au moins un capteur (62) du véhicule à moteur (10), dans lequel le palier (28) est surveillé en fonction de l'inclinaison déterminée, dans lequel il est reconnu en tenant compte de l'inclinaison du véhicule du véhicule à moteur (10) si une différence entre des valeurs du couple se trouve seulement au niveau d'un écart ou au niveau de l'écart et au niveau de l'augmentation de l'usure du palier (28).

2. Procédé selon la revendication 1,
**caractérisé en ce que**
au moins un signal indicatif est émis en fonction du couple déterminé au moyen d'un dispositif d'émission (58) du véhicule à moteur (10).

3. Procédé selon la revendication 2,
**caractérisé en ce que**
le signal indicatif est émis dans l'habitacle (60) du véhicule à moteur (10).

4. Procédé selon l'une quelconque des revendications précédentes,
**caractérisé en ce que**
le procédé est exécuté lors d'un processus de démarrage, pour lequel le véhicule à moteur (10) tout d'abord à l'arrêt est démarré par l'entraînement du véhicule à moteur (10) et est ainsi mis en mouvement, dans lequel un couple de démarrage nécessaire au démarrage du véhicule à moteur (10) et/ou fourni par la machine électrique (14) est déterminé comme couple.

5. Procédé selon l'une quelconque des revendications précédentes,
**caractérisé en ce que**
au moins un arbre (22) du véhicule à moteur (10) est entraîné pour l'entraînement du véhicule à moteur (10) et est ainsi tourné autour d'un axe de rotation (20), dans lequel une vitesse de rotation de l'arbre (22) est détectée au moyen d'au moins un capteur de vitesse de rotation (66) prévu outre le capteur de courant alternatif (44) du véhicule à moteur (10), et dans lequel le palier (28) est aussi surveillé en fonction de la vitesse de rotation détectée.

6. Procédé selon les revendications 4 et 5,
**caractérisé en ce que**
le couple de démarrage est aussi déterminé en fonction de la vitesse de rotation détectée.

7. Procédé selon l'une quelconque des revendications précédentes,
**caractérisé en ce que**
au moins une position du véhicule à moteur (10) sur la terre est déterminée, dans lequel le palier (28) est surveillé en fonction de la position.

8. Procédé selon l'une quelconque des revendications précédentes,
**caractérisé en ce que**
l'au moins une inclinaison du véhicule à moteur (10) autour de son sens transversal de véhicule et/ou l'au moins une accélération agissant sur le véhicule à moteur (10) est déterminée au moyen d'au moins un capteur d'accélération (62) comme le capteur (62) du véhicule à moteur (10).

9. véhicule à moteur (10) qui est réalisé pour l'exécution d'un procédé selon l'une quelconque des revendications précédentes.
